(19) Europäisches Patentamt
European Patent Office
Office européen des brevets

(11) Publication number: **0 191 244 B1**

(12) **EUROPEAN PATENT SPECIFICATION**

(45) Date of publication of patent specification: **12.06.91**

(51) Int. Cl.[5]: **C09D 133/18**, C08F 265/08

(21) Application number: **85309392.0**

(22) Date of filing: **20.12.85**

# (54) 100 Percent solids solvent borne nitrile photocurable coating compositions and the process for preparing photocurable coating compositions.

(30) Priority: **07.01.85 US 689278**
**21.03.85 US 714249**

(43) Date of publication of application:
**20.08.86 Bulletin 86/34**

(45) Publication of the grant of the patent:
**12.06.91 Bulletin 91/24**

(84) Designated Contracting States:
**CH DE FR GB IT LI NL SE**

(56) References cited:
**EP-A- 0 112 708**

(73) Proprietor: **THE STANDARD OIL COMPANY**
**Midland Building**
**Cleveland, Ohio 44115(US)**

(72) Inventor: **Bartoszek-Loza, Rosemary**
**6570 Arbordale Avenue**
**Solon Ohio 44139(US)**
Inventor: **Butler, Richard J.**
**23951 Lakeshore Blvd. No. 1207B**
**Euclid Ohio 44123(US)**

(74) Representative: **Smith, Sydney et al**
**Elkington and Fife Beacon House 113 Kingsway**
**London WC2B 6PP(GB)**

**EP 0 191 244 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention is directed generally to photocurable compositions for use as protective surface coatings on various substrates such as metal, wood, plastic and paper. This invention relates to novel 100 percent solids, solvent borne, nitrile resin, photocurable coating compositions. In another aspect, the invention relates to novel coating compositions and the process for curing the coating compositions, which coatings have excellent appearance, adhesion and hardness, good barrier properties and very good corrosion resistance. In another aspect, this invention relates to an improved novel photocurable process employing thermal post-cure treatment of coating compositions.

Many varieties of coating compositions have been used in the past based on various polymeric materials. These coatings are either solvent borne or water borne. Solvent borne coatings are disadvantageous in that large amounts of volatile organic solvents are present. These solvents may be costly and hazardous. Water borne coatings are also disadvantageous in that they are not continuous and have been found to contain more pinholes and voids than the solvent borne coatings. Furthermore, the cure of these coatings often requires excessive input of thermal energy.

Photocured coating compositions are becoming popular because they eliminate the air pollution problems associated with removal of solvents in the thermally cured coating composition. As a consequence, the search for essentially a solvent-free, non-polluting, low energy utilizing coating process has led to the use of radiation curable coating systems. The advantages of a solventless coating system includes the minimization of surface defects due to the absence of solvents and excellent heat and chemical resistance. A current approach as found in U.S. patent 4,359,370 involves partial vinyl-epoxy ester which can be partially cured by UV radiation followed by a post thermal cure.

As a result of an increasing need for photocured coating compositions, new processes need to be developed that produce photocurable coating compositions with improved properties.

The use of nitrile barrier latex coatings are known in the art. Representative examples of nitrile latex coating compositions and their preparation include those disclosed in U. S. Patent Nos 4,379,875 and 4,374,948. These patents teach that the nitrile latex coatings are thermally cured. Thermally cured nitrile latex coating processes require a high thermal energy input. Further, thermally cured coating compositions generally are 5-15 mils thick for corrosion resistant systems.

A general discussion of photoinduced curing is available in Kirk-Othmer Encyclopedia of Chemical Technology, Volume 19, p. 607, "Radiation Curing", John Wiley and Sons, Inc. 1982.

It is an object of this invention to provide high nitrile coating compositions which are photocured at ambient temperatures. It is another object of this invention to develop a new photocurable process for producing photocurable coating compositions. It is another object of this invention to develop a process to produce photocurable coating compositions which are corrosion resistant and have good adhesion to various substrates.

These and other objects, together with the advantages over known methods shall become apparent from the specification which follows and are accomplished by the invention as hereinafter described and claimed.

### Summary of the Invention

This invention relates to a coating composition comprising: a) a high nitrile resin, b) a photopolymerizable solvent, and c) a photoinitiator. The novel coating compositions of the present invention are hard, resistant to chemical attack, tenaciously adhere to various substrates, are capable of being coated as a thin film and are cured by irradation, avoiding high thermal energy input. The novel coating compositions of the present invention avoids solvent volatility and the need for solvent recovery.

The invention further includes a process to produce said coating compositions, comprising;

1) forming a mixture of a) a high nitrile resin, b) a photopolymerizable solvent and c) a photoinitiator,
2) applying the mixture to a sbustrate to form a coating, and
3) curing the coating by irradation to form the photocured coating composition.

The invention further includes an improved process for preparing photocurable coating compositions comprising:

1) forming a mixture of a photocurable coating resins,
2) applying the mixture to a substrate,
3) curing the coating resins by irradiation to form the photocured coating composition, and
4) baking the photocured coating composition.

The high nitrile photocurable coating compositions of this invention can be used for industrial corrosion

protection of metals where coating properties such as adhesion, hardness and corrosion resistance are important. The photocurable process of the instant invention produces coatings that can be used for industrial corrosion protection of metal, wood, plastic, paper and the like. Major uses for the coatings would be in the automotive industry as primers, in the oil industry as coating for pipeline and others. Further, the coating compositions may also be used in other fields such as adhesives, sealants, electrical components and the like.

Detailed Description of the Invention

The photocurable coating compositions of the instant invention are the reaction products of the high nitrile resins, photopolymerizable solvents and photoinitiators. The coating compositions of the present invention contain high nitrile resins in at least from 10 percent to 60 percent of the total weight. More preferably, the coating compositions contain high nitrile resins in from 20 percent to 55 percent, and most preferably from 30 percent to 50 percent of the total weight.

In the practice of this invention any of the high nitrile resins can be employed either alone or in combination. High nitrile resins used in this invention comprise by weight, 40-90 percent nitrile monomer, 5-40 percent monovinyl monomer, and 1-30 percent rubber component.

The high nitrile resins useful in the inventive coatings can be prepared by any method known in the art. Preferably, these high nitrile resins are prepared by polymerization in an emulsion of a major portion of an olefinically unsaturated monovinyl nitrile, a second monovinyl monomer component copolymerizable therewith and a preformed rubber component. The preparation of typical high nitrile resins are more fully described in U. S. Patent No 4,379,875 which is herein incorporated.

The preferred high nitrile resins comprise a copolymer produced by the polymerization of a major portion of a vinyl-mono-unsaturated nitrile and a minor portion of a second monovinyl monomer component.

The olefinically unsaturated nitriles used in the present invention are the alpha, beta-olefinically unsaturated mononitriles having the structure:

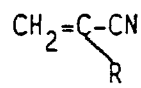

wherein R is hydrogen, a lower alkyl group having from 1 to 4 carbon atoms or a halogen. Such compounds include acrylonitrile, alpha-chloroacrylonitrile, alpha-fluoroacrylonitrile, methacrylonitrile, ethacrylonitrile and the like. The most preferred olefinically unsaturated nitriles useful in the present invention are acrylonitrile, methacrylonitrile and mixtures thereof.

The monovinyl monomer component copolymerizable with the olefinically unsaturated nitrile includes one or more of the esters of olefinically unsaturated carboxylic acids, vinyl esters, vinyl ethers, alpha-olefins, vinyl aromatic monomers and others.

The esters of olefinically unsaturated carboxylic acids include those having the structure:

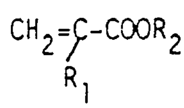

wherein $R_1$ is hydrogen, an alkyl group having from 1 to 30 carbon atoms, or a halogen, and $R_2$ is an alkyl group having from 1 to 6 carbon atoms. Compounds of this type include but are not limited to methyl acrylate, ethyl acrylate, the propyl acrylates, the butyl acrylates, the amyl acrylates, the hexyl acrylates, methyl methacrylate, ethyl methacrylate, the propyl methacrylates, the butyl methacrylates, the amyl methacrylates and the hexyl methacrylates, methyl alpha-chloroacrylates, ethyl alpha-chloroacrylates, acrylic acid, methacrylic acid and the like. Most preferred in the present invention are methyl acrylate, ethyl acrylate, methyl methacrylate, ethyl methacrylate, acrylic acid and methacrylic acid.

The alpha-olefins useful in the present invention are those having at least 4 and as many as 10 carbon atoms having the structure:

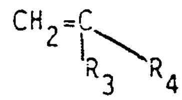

wherein $R_3$ and $R_4$ are alkyl groups having from 1 to 7 carbon atoms. Representative compounds include isobutylene, 2-methyl butene-1,2 methyl pentene-1, 2-methyl hexene-1, 2-methyl heptene-1, 2-methyl octene-1, 2-ethyl butene-1, 2-propyl pentene-1 and the like. Most preferred is isobutylene.

The vinyl ethers include methyl vinyl ether, ethyl vinyl ether, propyl vinyl ethers, the butyl vinyl ethers, methyl isopropenyl ether, ethyl isopropenyl ether and the like. Most preferred are methyl vinyl ether, ethyl vinyl ether, the propyl vinyl ethers and the butyl vinyl ethers.

The vinyl esters include vinyl acetate, vinyl propionate, the vinyl butyrates and the like. Most preferred is vinyl acetate.

The vinyl aromatic monomers include styrene, alpha-methyl styrene, the vinyl toluenes, and vinyl xylenes, indene and the like. Most preferred are styrene and indene.

The high nitrile resin is optionally in the presence of rubber component which may be a homopolymer or copolymer of a conjugated diene monomer.

The conjugated diene monomers useful in the present invention include butadiene-1,3; isoprene; chloroprene; bromoprene; cyanoprene; 2,3-dimethyl butadiene-1,3; 2-ethyl butadiene-1,3; 2,3-diethyl butadiene-1,3 and the like. Most preferred for the purpose of this invention are butadiene-1,3 and isoprene because of their ready availability and their excellent polymerization properties.

The conjugated diene monomer may be copolymerized with a comonomer selected from the group consisting of vinyl aromatic monomer, an olefinic nitrile monomer having the structure:

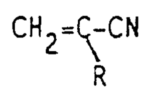

wherein R has the foregoing designation, and an ester having the structure:

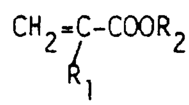

wherein $R_1$ and $R_2$ have the foregoing designations. The rubber component contains from 50 percent to 100 percent by weight of polymerized conjugated diene monomer and from 0 percent to 50 percent by weight of a comonomer.

Preferred high nitrile resins useful in the coating compositions of this invention are those prepared by the polymerization of;

100 parts by weight of (A) from 60 percent to 90 percent by weight of at least one nitrile having the structure:

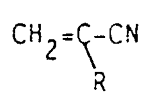

wherein R has the foregoing designation, and (B) from 10 percent to 40 percent by weight based on the combined weights of (A) and (B) of at least one member selected from the group consisting of (1) an ester having the structure:

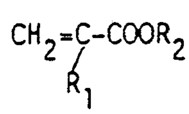

wherein $R_1$ and $R_2$ have the foregoing respective designations, (2) an alpha-olefin having the structure:

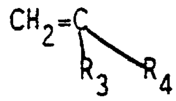

wherein $R_3$ and $R_4$ have the foregoing respective designations, (3) a vinyl ether selected from the group consisting of methyl vinyl ether, ethyl vinyl ether, the propyl vinyl ethers, and the butyl vinyl ethers, (4) vinyl acetate, (5) styrene, and (6) indene,

in the presence of from 1 to 40 parts by weight of (C) a rubber of a conjugated diene monomer selected from the group consisting of butadiene and isoprene and optionally a comonomer selected from the group consisting of styrene, a nitrile monomer having the structure:

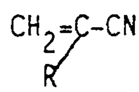

wherein R has the foregoing designation, and an ester having the structure:

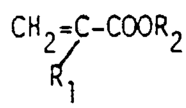

wherein $R_1$ and $R_2$ have the foregoing respective designations, said rubbery polymer containing from 50 percent to 100 percent by weight of polymerized conjugated diene and from 0 percent to 50 percent by weight of a comonomer.

More preferred high nitrile resins useful in this invention are those prepared by the polymerization of more than 70 parts by weight of a monounsaturated nitrile and less than 30 parts by weight of a monovinyl monomer component copolymerizable with said nitrile in the presence of a preformed rubber of a conjugated diene.

The second component of the coating compositions of the present invention is a photopolymerizable solvent. These solvents are any which are compatible with the high nitrile resin components and are generally well-known in the art. During photocure a radical induced polymerization of the solvent is triggered photochemically by exposure to irradiation. The coating compositions are classified as 100 percent solids because the photopolymerizable solvent crosslinks and is incorporated into the coating. Minor amounts of other solvents may optionally be used which may be volatile, which does not defeat the object of this invention, to provide a substantially 100 percent solid coating composition.

These photopolymerizable solvents can be employed either alone or in combination. The coating compositions generally contain, in percent of the total weight, from 30 percent to 99 percent, preferably from 40 percent to 80 percent and most preferably from 50 percent to 75 percent the photopolymerizable solvent.

Types of suitable photopolymerizable solvents include acrylates, olefinically unsaturated carboxylic acids and their anhydrides, vinyl esters, vinyl halides, vinyl cyanides, vinyl amides, vinyl amines, olefins and others.

Acrylates useful as the photopolymerizable solvent include but are not limited to mono or di(meth) acrylates or their esters that can be substituted or unsubstituted such as alkyl, cycloalkyl, glycidyltetrahydrofurfuryl, allyl, hydroxyalkyl, and further include alkene gycol acrylate, polyoxyalkylene glycol acrylate, trimethyl propane acrylate, pentaerythritol acrylate and cyanoethylacrylate. Most preferred are alkyl acrylate, cycloalkyl acrylate, glycidyltetrahydrofurfuryl acrylate and cyanoethylacrylate.

The alpha, beta olefinically unsaturated carboxylic acids and their anhydrides useful as the photopolymerizable solvent include but are not limited to acrylic acid; methacrylic acid; alpha chloro, bromo or cyanoacrylic acid; maleic acid; maleic anhydride; alpha-chloro maleic acid; dichloromaleic anhydride; itaconic acid and scorbic acid. Most preferred are acrylic acid and methacrylic acid.

The vinyl esters useful as the photopolymerizable solvent include but are not limited to methylvinyl ether, ethylvinyl ether, propylvinyl ether, butylvinyl ether, amylvinyl ether, hexylvinyl ether, cyclohexylvinyl ether, phenylvinyl ether, heptylvinyl ether and octylvinyl ether. Most preferred are methylvinyl ether and ethylvinyl ether.

The vinyl halides useful as the photopolymerizable solvent include but are not limited to vinylchloride, vinylbromide, vinylfluoride, vinylidene chloride, vinylidene bromide, vinylidene fluoride, dichlorodifluoroethylene, chlorotrifluoroethylene, trifluoroethylene and chloroprene. Most preferred are vinylchloride and vinylidene chloride.

The vinyl cyanides useful as the photopolymerizable solvent include but are not limited to acrylonitrile, methacrylonitrile, maleic dinitrile, fumaronitrile, and vinylidene cyanide. Most preferred are acrylonitrile and methacrylonitrile.

The vinylamides useful as the photopolymerizable solvent include but are not limited to acrylamide, N-methylacrylamide, N,N-dimethylacrylamide, N,N dimethylmethacrylamide, N-t-butylacrylamide, N-dodecyl acrylamide, N-phenyl acrylamide, N-vinyl acrylamide, N,N-methylenebisacrylamide, dimethylforamide and diethyl-formamide. Most preferred are N,N dimethylmethacrylamide, N,N-methylenebisacrylamide and N,N dimethylacrylamide.

The vinyl amines useful as the photopolymerizable solvent include but are not limited to N-vinyl piperidine and vinyl pyridine.

The olefins useful as the photopolymerizable solvent include but are not limited to ethylene, propylene, butylenes, amylenes, hexylenes, heptenes, octylenes, 1,3-butadiene, isoprene, styrene, alpha-methylstyrene, and alpha-chlorostyrene. Most preferred are styrene and alpha-methylstyrene.

Other exemplary typical photopolymerizable solvents are N-vinyl pyrrolidone, styrene, N-methyl pyrrolidone, ethylene carbonate, gamma-butyrolactone, and dimethylsulphone. The most preferred are N-vinyl pyrrolidone, gamma butyrolactone and styrene.

The third component of the coating composition of the present invention is the photoinitiator. During cure the photoinitiators absorb actinic radiation, forming reactive free radical intermediates that react further with the photopolymerizable solvent and resin. A general discussion of chemical reaction initiators is available in Kirk-Othmer, Encyclopedia of Chemical Technology, Vol. 13, pp. 355-373, "Initiators", John Wiley and Sons, 1978. These photoinitiators can be employed either alone or in combination in an amount sufficient to effect the photocure of the coating composition upon irradiation. The coating composition generally contains, in percent of the total weight, from 0.1 percent to 10 percent by weight, preferably from 0.1 percent to 5 percent by weight, and most preferably from 0.5 percent to 2 percent by weight, of the photoinitiator.

These photoinitiator additives and the cure thereof are generally well known in the art. Examples of suitable photoinitiators include acetophenone derivatives, azo compounds, benzoin derivatives, amines and their derivatives, anthraquinone derivatives, dibenzyl ketones, benzophenone derivatives, benzoin alkyl ethers and the like. Particular non-limiting examples of the photoinitiators include benzophenone, benzyl, benzoin ethyl ether, and azobisisobutyronitrile. Most preferred is benzophenone and ethyl diethanolamine or similar amines.

It will be readily apparent to those skilled in the art that the coating compositions of the instant invention may be further modified by the addition of plasticizers, stabilizers, pigments, dispersants, defoamers, surfactants, extenders, fillers, reinforcing agents and other film formers. The coating compositions of the instant invention may also optionally contain various flattening agents, surface active agents, thixotropic agents, UV light absorbers, flow control agents viscosity agents, antioxidant agents and dyes. All these additives and the use thereof are well known in the art and do not require extensive discussion, it being understood that any compound possessing the ability to function in such a manner, i.e., as a flattening agent, surface active agent, UV light absorber and the like, can be used so long as they do not deleteriously affect the photocuring of the coating composition and do not adversely affect the characteristics of the coating.

The process of the instant invention can employ any coating compositions that can be photocured, in particular the novel coating compositions described in this specification. Coating compositions cured by irradiation require a first component coating resin comprising monomers, oligomers or polymers having at least one reactive site, a second component comprising photoinitiators which induce polymerization by free radical formation and optionally a third component comprising photopolymerizable solvents. Typical exemplary first components in the photocurable coating compositions include but are not limited to high nitrile resins, epoxies, acrylics, polyesters, aliphatic polyurethanes, aromatic polyurethanes, nitrile rubber polymers, vinyl chlorides, vinyl acetate containing polymers, amideacrylates, cyclized rubbers, allyic esters, phenolic polymers and acid functional acrylic resins and the like. Typical exemplary photoinitiators and photopolymerizable solvents used in the photocurable coating compositions are any of the aforementioned photoinitiators and photopolymerizable solvents. These compounds of photocured coating compositions are generally well known in the art and can be easily prepared by a skilled artisan.

In the practice of this inventive process, the photocurable coating compositions are first compounded by

adding together monomeric, oligomeric or polymeric components, preferably a high nitrile resin, and the photopolymerizable solvent, if desired, in any order to form a mixture. To this mixture is then added the photoinitiators, preferably in the dark, with stirring. Optionally, at any step prior to the photocure in the process, any of the aforementioned additives may be stirred into the mixture. The various component of the photocurable coating composition are thoroughly mixed to form a generally homogeneous coating composition.

A thin, relatively uniform film of coating resins is applied onto a substrate by any of the known means such as Guardco® wet film applicator rods, knife, bar, airless spraying, dipping, roller coating, flowing, brushing, conventional and/or electrostatic spray gun, electrodeposition, and the like. The various substrates employed can be wood, paper, metal, pretreated metal, plastic and the like. Generally, the coating composition is applied in an amount sufficient to provide a dry cured coating thickness of from 0.05 mil to 5 mil, preferably from 0.1 mil to 3 mil and most preferably from 0.2 mil to 1.3 mil. Optionally, multiple coats of the composition may be applied to the substrate.

The coating composition is then cured by irradiation. The light source preferably emits wavelengths in the ultraviolet spectrum from 2,200 Angstroms to 14,000 Angstroms. Irradiation exposure should be for a strength and time sufficient to cause crosslinking resulting in a tack free cured coating. The systems used to generate ultraviolet radiation for the photopolymerization reaction can be any known in the art such as low pressure, medium pressure, high pressure, or super high pressure, mercury lamps; mercury, carbon and plasma arc lamps; xenon lamps; UV light emitting diodes; UV emitting lasers and the like. The photopolymerizable coating compositions can also be cured using an electron beam apparatus.

The coating compositions are photocured to a tack free coating at ambient temperature as low as about 10 °C with the upper temperature limits at about 100 °C. During photocure, as the temperature increases there can be simultaneous UV and thermal cures occurring to the coating compositions.

After UV curing, there is present on the surface of the substrate a hard, non-tacky, mar, adhesion and chemical resistant coating which tenaciously adheres to the substrate.

The photocured coating compositions in another embodiment are then baked after the photocure step at a temperature from 40 °C to 240 °C preferably from 90 °C to 180 °C, and most preferably from 100 °C to 140 °C. The photocured coating compositions are post baked for 30 seconds to 24 hours, preferably for 1 minute to 8 hours, most preferably for 2 minutes to 2 hours.

After photocuring and post baking there is present on the surface a hard, non-tacky, mar, adhesion and chemical resistant coating.

The coating compositions are comprised of the photoreaction products of the high nitrile resins, the photopolymerizable solvents and the photoinitiators. It is theorized that the photocured coatings of the instant invention most likely form additional crosslinks by grafting a solvent onto resin. Upon absorption of radiation the photoinitiator forms a radical species which initiates polymerization. Upon initiation of polymerization grafting may occur. Grafting may occur between resin and resin; resin and solvent; and solvent and solvent with the photoinitiators incorporated therein. That is, it is believed that the coating is comprised of several polymerizable monomers grafted onto the high nitrile resin. 100 percent solids coating compositions occur because the photopolymerizable solvent upon curing, crosslinks in the coating compositions thus the photopolymerizable solvent is polymerized and is not volatile. It is further believed that by employing a thermal post treatment to the compositions, further crosslinking and grafting occurs. The thermal post treatment results in an enhanced corrosion resistant photocured coating compositions because the additional crosslinks and grafts causes the composition to have improved barrier properties and improved corrosion resistance. The coatings' superior properties are derived not only from the ability of the polymer matrix to crosslink and graft but also from the ability of the nitrogen containing monomers to act as corrosion inhibitors.

A general discussion as to how coatings function is available in, Kirk-Othmer Encyclopedia of Chemical Technology, Volume 7, p. 113, "Corrosion and Corrosion Inhibitors", John Wiley and Sons, Inc., 1979. and L. Blecher, D.H. Lorenz, H.L. Lowd, A.S. Wood and D.P. Wyman, "Handbook of Water-Soluble Gums and Resins", R.L. Davidson, ed., McGraw Hill, N.Y. 1980.

The high nitrile resin photocurable coating compositions of the present invention exhibit excellent photocurability to irradiation, long term storage stability and give a rigid film having good bonding properties and workability after the photocuring step. By selection of components and additives the compositions may be applied both as transparent coatings and opaque coatings. The thermal post treatment employed in the photocurable coatings process of the instant invention enhances the corrosion resistance of the coating compositions.

Specific Embodiments

The following examples demonstrate the process and advantages of the present invention.

Test Method

The following photocurable coating compositions 1-14, A, B and C were prepared by dissolving a high nitrile resin in a photopolymerizable solvent by stirring. To this solution, in the dark, was added the photoinitiator system. The resulting mixture was stirred to form generally a homogeneous mixture of the composition.

The coating composition of 1-14, A, B and C were applied by Guardco® (available from Paul N. Gardener, Lauderdale-By-The-Sea, Florida) wet film application rods to the surface of two phosphate cold rolled steel approximately 10 cm x 15 cm test panels. Coated panels 1-14, B and C were then exposed to ultraviolet light until a tack free coating composition resulted.

Photocured coated panels 13 and 14 were then heat treated at the temperature and for the time indicated in Table III. Comparative photocured panels B and C were not post heat treated.

Comparative Example A which has the same coating composition as Example 2 was cured by employing a thermal process. The coated panel was placed in an oven at 100° C for 30 minutes.

In each case, ASTM standard adhesion (tape test) and hardness (pencil) tests were carried out in the coated metal substrate. Identical duplicate coated metal substrates were subjected to salt fog exposure.

The adhesion tape test (ASTM D3359-78) was carried out by applying a strip of Scotch Brand No. 670 tape (3M) to a cross-cut section previously made by a sharp tool in the coated substrate. The tape was then removed. The percent adhesion, of coating remaining on the substrate, was assessed on a 0-100 scale with no adhesion being 0 and 100 percent adhesion being no loss of coating.

The hardness test measures the rigidity of the organic coating applied to rigid substrates such as metal panels. The hardness test, (ASTM D 3363-74) was carried out by forcing pencil leads of increasing hardness values against the coated surface in a precisely defined manner, until one lead mars the surface. Surface hardness is defined by the hardest pencil lead which just fails to mar the coated surface. Test ranges are 6B to 8H with 8H being excellent, that is, the hardest lead failed to mar the coating.

The Impact (ASTM D 2794-82) test measure the tendency for a coating to crack after being deformed by an impacting force. A falling stainless steel ball weight hits a panel with the coated side down for the reverse impact test and the coated side up for the direct impact test. The height of the fall in inches multiplied by the dropping weight in pounds is the impact energy. Test ranges are 0-160 inch-pounds (in-lb). To pass the test, a tape of standard scotch brand is applied to the impacted area and snapped off and the coating must remain intact. A 160 means there is no loss of coating after the tape is snapped off and 0 is a failure. The results are shown in Table I for each of the compositions 1-12.

The salt fog (ASTM B 117) test measures the corrosion resistance of the coating composition. Salt fog testing was carried out by masking with black tape uncoated portions of the panel. Then the rest of the panel is coated with the coating composition and a large X is scribed in the dried coated panel. The panel is placed in a salt-fog cabinet for a given period of time. The cabinet induced accelerated corrosion testing through exposure of the specimens to a salt-fog atmosphere. A rating is given based on the degree of rusting and length of time the sample have been exposed to the salt fog atmosphere. Test ranges are 0 to 10, with a 0 rating for all rust and a 10 rating for no appreciable rust, furthermore, the scale is logarithmic between the two extreme endpoints. The results of the salt fog testing are shown in Table II.

COATING COMPOSITIONS OF THE SPECIFIC EXAMPLES

| Example 1. | Composition | Percent |
|---|---|---|
| | Barex 210®** | 24.4 |
| | N-vinyl pyrrolidone | 73.2 |
| | Benzophenone | 2.4 |

| Example 2. | Composition | Percent |
|---|---|---|
| | Barex 210®** | 24.5 |
| | N-vinyl pyrrolidone | 73.5 |
| | Benzophenone | .98 |
| | Ethyldiethanol amine | .98 |

| Example 3. | Composition | Percent |
|---|---|---|
| | Barex 210®** | 19.7 |
| | N-vinyl pyrrolidone | 59.0 |
| | Cyanoethylacrylate | 19.7 |
| | Benzophenone | .79 |
| | Ethyldiethanol amine | .79 |

| Example 4. | Composition | Percent |
|---|---|---|
| | Barex 210®** | 19.7 |
| | N-vinyl pyrrolidone | 59.0 |
| | N,N-dimethylacrylamide | 19.7 |
| | Benzophenone | .75 |
| | Ethyldiethanolamine | .75 |

| Example 5. | Composition | Percent |
|---|---|---|
| | Barex 210®** | 19.3 |
| | N-vinyl pyrrolidone | 57.9 |
| | N,N-dimethylacrylamide | 19.3 |
| | Styrene | 1.9 |
| | Benzophenone | .77 |
| | Ethyldiethanolamine | .77 |

| Example 6. | Composition | Percent |
|---|---|---|
| | Barex 210®** | 17.9 |
| | N-vinyl pyrrolidone | 53.8 |
| | N,N-dimethylacrylamide | 17.9 |
| | Styrene | 8.9 |
| | Benzophenone | .72 |
| | Ethyldiethanolamine | .72 |

Example 7.

| Composition | Percent |
|---|---|
| Barex 210®** | 16.4 |
| N-vinyl pyrrolidone | 49.3 |
| N,N-dimethylacrylamide | 16.4 |
| Styrene | 16.4 |
| Benzophenone | .66 |
| Ethyldiethanolamine | .66 |

Example 8.

| Composition | Percent |
|---|---|
| Barex 210®** | 24.2 |
| N-vinyl pyrrolidone | 72.5 |
| N,N-dimethylacrylamide | 1.4 |
| Benzophenone | .97 |
| Ethyldiethanolamine | .97 |

Example 9.

| Composition | Percent |
|---|---|
| Barex 210®** | 24.2 |
| N-vinyl pyrrolidone | 72.5 |
| N,N-dimethylacrylamide | 1.4 |
| Benzophenone | .97 |
| Ethyldiethanolamine | .97 |

Example 10.

| Composition | Percent |
|---|---|
| Barex 210®** | 24.2 |
| N-vinyl pyrrolidone | 72.5 |
| N,N-dimethylacrylamide | 1.4 |
| Benzophenone | .97 |
| Ethyldiethanolamine | .97 |

Example 11.

| Composition | Percent |
|---|---|
| Barex 210®** | 24.5 |
| gamma Butyrolactone | 73.5 |
| Benzophenone | .98 |
| Ethyldiethanolamine | .98 |

Example 12.

| Composition | Percent |
|---|---|
| Barex 210®** | 39.4 |
| gamma Butyrolactone | 59.1 |
| Benzophenone | .78 |
| Ethyldiethanolamine | .78 |

Comparative* Example A

| Composition | Percent |
|---|---|
| Barex 210®** | 24.5 |
| N-vinyl pyrrolidone | 73.5 |
| Benzophenone | .98 |
| Ethyldiethanol amine | .98 |

| Example 13 | Composition | Percent |
|---|---|---|
| | Barex 210®** | 23.8 |
| | N-vinyl pyrrolidone | 74.4 |
| | Benzophenone | .89 |
| | Ethyldiethanol amine | .89 |

| Comparative Example B | Composition | Percent |
|---|---|---|
| | Barex 210®** | 24.5 |
| | N-vinyl pyrrolidone | 73.5 |
| | Benzophenone | .98 |
| | Ethyldiethanol amine | .98 |

| Example 14 | Composition | Percent |
|---|---|---|
| | Barex 210®** | 38.8 |
| | Gamma-Butyrolactone | 58.1 |
| | Benzophenone | 1.5 |
| | Ethyldiethanol amine | 1.5 |

| Comparative Example C | Composition | Percent |
|---|---|---|
| | Barex 210®** | 39.4 |
| | Gamma-Butyrolactone | 59.0 |
| | Benzophenone | .79 |
| | Ethyldiethanol maine | .79 |

* Cured by thermal process.

** Barex 210® - available from Sohio Chemical Company, Cleveland, Ohio was commercial grade and is a butadiene-acrylonitrile preformed rubbery resin.

## Results

The results of the coating compositions 1-12 with varying thickness demonstrates 60 percent to 100 percent adhesion, 2H to 8H hardness with most of the test points showing excellent hardness, a 5 in-lb to 160 in-lb direct impact, and 0 in-lb to 100 in-lb reverse impact. These results demonstrate that the coating compositions of the instant invention show excellent adhesion, hardness and good barrier properties. The results for Examples 13 and 14 and comparative examples B and C showed 100 percent adhesion and 8H hardness for all test specimens. The ASTM standard adhesion, hardness, impact and salt fog measurements could not be carried out because the coating compositions did not form, it was only tacky film on metal substrate.

The results from the hardness and adhesion tests demonstrate that the excellent hardness and adhesive properties of the photocured coating compositions are not changed by the post thermal treatment in the process of the instant invention.

The results of the salt fog testing demonstrate that photocurable coating compositions 1-12 provided in accordance with this invention renders protection from corrosion such that there is no appreciable rust from 24 to 1050 hours. These results exemplify the very good corrosion resistance of the coating composition of

the instant invention.

The results from the salt fog tests 13, 14, B and C demonstrates that the corrosion resistance is significantly enhanced by the process of the instant invention employing a thermal post treatment of photocured coating compositions.

The coating compositions of the instant invention can be employed for various uses where all the properties are not required for good coating compositions, for example a good corrosion resistent coating may not be employed in an environment requiring high impact strength.

Although the invention has been described in detail through the preceeding examples, these examples are for the purpose of illustration only, and it is understood that variations and modifications can be made by one skilled in the art without departing from the spirit and the scope of the invention.

TABLE I

THE CURING OF COATING COMPOSITIONS UNDER ULTRAVIOLET LIGHT

| COMPOSITION | TIME (MIN.) | THICKNESS (MIL) | ADHESION | HARDNESS | * D-IMPACT (IN-LB)*** | ** R-IMPACT (IN-LB)*** |
|---|---|---|---|---|---|---|
| 1 | 75 | 0.1-0.2 | 90 percent | 8H | 25 | 10 |
| | 180 | 0.3-0.5 | 100 percent | 2H | 50 | 10 |
| | 180 | 0.5 | 100 percent | HB | 100 | 0 |
| 2 | 130 | 0.1-0.2 | 100 percent | 8H | 25 | 0 |
| | 150 | 0.1-0.2 | 100 percent | 8H | 25 | 0 |
| 3 | 60 | 0.2 | 100 percent | 8H | 50 | 0 |
| | 120 | 0.2 | 100 percent | 8H | 50 | 0 |
| 4 | 60 | 0.2 | 100 percent | 8H | 30 | 10 |
| | 90 | 1.0 | 60 percent | 8H | 40 | 10 |
| 5 | 120 | 0.4-0.5 | 95 percent | 8H | 30 | 10 |
| 6 | 120 | 0.2 | 100 percent | 8H | 25 | 0 |
| 7 | 60 | 0.4 | 100 percent | 8H | 160 | 50 |
| | 120 | 0.4 | 100 percent | 8H | 160 | 50 |
| 8 | 60 | 0.4-0.5 | 100 percent | 8H | 75 | 10 |
| 9 | 60 | 0.2-0.4 | 100 percent | 8H | 40 | 0 |
| 10 | 60 | 0.2-0.4 | 100 percent | 8H | 40 | 0 |
| 11 | 30 | 0.5 | 100 percent | 8H | 100 | 100 |
| 12 | 30 | 0.05-0.07 | 100 percent | 6H | 40 | 10 |

* Direct Impact
** Reverse Impact
*** Inch-Pounds

TABLE II

PERCENTAGE OF SURFACE RUST

| | Rust Rating | | | |
|---|---|---|---|---|
| Composition | (24 hrs.) | (192 hrs.) | (408 hrs.) | (1050 hrs.) |
| 1 | 0 | - | - | - |
| 2 | 2 | - | - | - |
| 6 | 3 | - | - | - |
| 7 | 5 | - | - | - |
| 8 | 9-10 | - | - | - |
| 9 | 7 | 5 | - | - |
| 10 | 7 | 0 | - | - |
| 11 | 10 | 10 | 9 | - |
| 12 | 10 | 10 | 9 | 9 |

TABLE III

SALT FOG DATA FOR POST THERMAL TREATMENT

| Composition | Post-bake Temperature (°C) | Time (Minutes) | Rust Rating 24 hrs | Rust Rating 1000 hrs |
|---|---|---|---|---|
| Example 13 | 40°C | 5 | 2 | -- |
| | 40°C | 10 | 2 | -- |
| | 40°C | 15 | 2 | -- |
| | 70°C | 5 | 2 | -- |
| | 70°C | 10 | 2 | -- |
| | 70°C | 15 | 2 | -- |
| | 90°C | 5 | 2 | -- |
| | 90°C | 10 | 3 | -- |
| | 90°C | 15 | 2 | -- |
| | 100°C | 5 | 3 | -- |
| | 100°C | 10 | 3 | -- |
| | 100°C | 15 | 2 | -- |
| | 110°C | 5 | 3 | -- |
| | 110°C | 10 | 3 | -- |
| | 110°C | 15 | 2 | -- |
| | 140°C | 5 | 4 | -- |
| | 140°C | 10 | 5 | -- |
| | 140°C | 15 | 4 | -- |
| | 160°C | 5 | 2 | -- |
| | 160°C | 10 | 1 | -- |
| | 160°C | 15 | 1 | -- |
| Example 14 | 40°C | 10 | 10 | 9 |
| | 60°C | 10 | 10 | 9 |
| | 90°C | 10 | 10 | 9 |
| | 100°C | 10 | 10 | 10 |
| | 110°C | 10 | 10 | 9 |
| | 130°C | 10 | 10 | 7 |
| | 140°C | 10 | 10 | 10 |
| | 160°C | 10 | 10 | 10 |
| | 180°C | 10 | 10 | 9 |
| | 210°C | 10 | 10 | 9 |
| | 240°C | 10 | 10 | 10 |
| Comparative B | 0 | 0 | 2 | |
| Comparative C | 0 | 0 | 10 | 6 at 408 hrs. |

## Claims

1. A photocurable coating composition comprising: (a) a high nitrile resin, (b) a photopolymerizable solvent and (c) a photoinitiator, the high nitrile resin comprising a copolymer formed by the polymerization of;

100 parts by weight of (A) from 60 percent to 90 percent by weight of at least one nitrile having the structure:

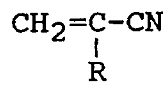

wherein R is hydrogen, a lower alkyl group having from 1 to 4 carbon atoms or a halogen, and (B) from 10 to 40 percent by weight based on the combined weights of (A) and (B) of at least one member selected from the group consisting of (1) an ester having the structure:.

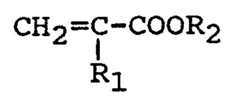

wherein $R_1$ is hydrogen, an alkyl group having from 1 to 30 carbon atoms or a halogen and $R_2$ is an alkyl group having from 1 to 6 carbons (2) an alpha-olefin having the structure:

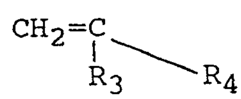

wherein $R_3$ and $R_4$ are alkyl groups having from 1 to 7 carbon atoms, (3) a vinyl ether selected from the group consisting of methyl vinyl ether, ethyl vinyl ether, the propyl vinyl ethers, and the butyl vinyl ethers, (4) vinyl acetate, (5) styrene, and (6) indene, in the presence of from 1 to about 40 parts by weight of (C) a rubber of a conjugated diene monomer selected from the group consisting of butadiene and isoprene and optionally a comonomer selected from the group consisting of styrene, a nitrile monomer having the structure:

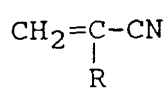

wherein R is as defined above, and an ester having the structure:

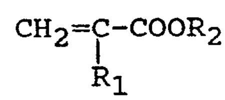

wherein $R_1$ and $R_2$ are as defined above, said rubbery polymer containing from 50 percent to 100 percent by weight of polymerized conjugated diene and from 0 percent to 50 percent by weight of a comonomer.

**2.** A photocurable coating composition as claimed in claim 1 characterized in that said high nitrile resin comprises from 40 to 90 percent nitrile, from 5 to 40 percent monovinyl monomer and from 1 to 30 percent rubber, preferably from 65 to 75 percent nitrile, from 25 to 35 percent monovinyl monomer and from 1 to 20 percent rubber.

**3.** A photocurable coating composition as claimed in claim 1 or claim 2 characterized in that said mono-unsaturated nitrile is selected from the group consisting of acrylonitrile, alpha-chloroacrylonitrile, alpha-fluoroacrylonitrile, methacrylonitrile, ethacrylonitrile and combinations thereof.

**4.** A photocurable coating composition as claimed in any of claims 1 to 3 characterized in that said second monovinyl monomer component is selected from the group consisting of acrylic acid, methacrylic acid, methylacrylate, ethylacrylate, methyl methacrylate, ethyl methacrylate, isobutylene,

methylvinyl ether, ethyl vinyl ether, propyl vinyl ethers, butyl vinyl ethers, vinyl acetate, styrene, indene and combinations thereof.

**5.** A photocurable coating composition as claimed in any of claims 1 to 4 characterized in that said rubber comprises a homopolymer of a conjugated diene monomer.

**6.** A photocurable coating composition as claimed in any of claims 1 to 5 characterized in that the said rubber comprises from 50 to 100 percent by weight of a conjugated diene monomer and from 0 to 50 percent by weight of a comonomer.

**7.** A photocurable coating composition as claimed in any of claims 1 to 6 characterized in that the photopolymerizable solvent is selected from the group consisting of acrylates, olefinically unsaturated carboxylic acid and their anhydrides, vinyl esters, vinyl halides, vinyl cyanides, vinyl amides, vinyl amines, olefins and combinations thereof.

**8.** A coating composition as claimed in claim 7 characterized in that the photopolymerizable solvent is selected from the group consisting of N-vinyl pyrrolidone, cyanoethylacrylate, styrene, N,N-dimethylacrylamide, N,N-methylenebisacrylamide, gamma-butyrolactone and combinations thereof.

**9.** A photocurable coating composition as claimed in any of claims 1 to 8 characterized in that the photoinitiator is selected from the group consisting of:
a) benzophenone, benzyl, benzoin ethyl ether; and
b) azobisiobutyronitrile, ethyl diethanolamine or a combination thereof.

**10.** A photocurable coating composition as claimed in claim 9 characterized in that the photoinitiator is benzophenone and ethyl diethanolamine.

**11.** A process for preparing a photocured coating composition characterized in that a composition as claimed in any of claims 1 to 10 is applied to a substrate to form a coating, and the coating is cured by irradiation to form the photocured coating composition.

**12.** A process as claimed in claim 11 characterized in that the irradiation comprises wavelengths from 2,200 Ä (2,200 x $10^{-10}$m) to 14,000 Ä (14,000 x $10^{-10}$m).

**13.** A process as claimed in claim 12 characterized in that the photocured coating resin is baked.

**14.** A process as claimed in claim 13 characterized in that the baking is carried out at a temperature within the range of 40° C to 240° C.

**15.** A process as claimed in claim 14 characterized in that the baking is carried out at a temperature of from 90° C to 180° C, and preferably of from 100° C to 140° C.

**16.** A process as claimed in any of claims 13 to 15 characterized in that the period of baking is within the range of 30 seconds to 24 hours, preferably 1 minute to 8 hours, and in particular 2 minutes to 2 hours.

**17.** A photocurable coating composition as claimed in claim 1 comprising:
(a) a high nitrile resin comprising
100 parts by weight of (A) from 60 percent to 90 percent by weight of at least one nitrile having the structure:

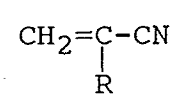

wherein R is as defined in claim 1, and (B) from 10 to 40 percent by weight based on the combined weights of (A) and (B) of at least one member selected from the group consisting of (1) an ester having the structure:

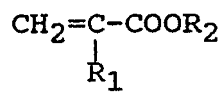

wherein $R_1$ and $R_2$ are as defined in claim 1, (2) an alpha-olefin having the structure:

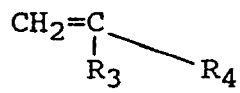

wherein $R_3$ and $R_4$ are as defined in claim 1, (3) a vinyl ether selected from the group consisting of methyl vinyl ether, ethyl vinyl ether, the propyl vinyl ethers, and the butyl vinyl ethers, (4) vinyl acetate, (5) styrene, and (6) indene, in the presence of from 1 to about 40 parts by weight of (C) a rubber of a conjugated diene monomer selected from the group consisting of butadiene and isoprene and optionally a comonomer selected from the group consisting of styrene, a nitrile monomer having the structure:

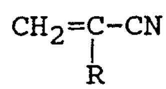

wherein R is as defined in claim 1, and an ester having the structure:

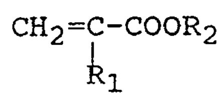

wherein $R_1$ and $R_2$ are as defined in claim 1, said rubbery polymer containing from 50 percent to 100 percent by weight of polymerized conjugated diene and from 0 percent to 50 percent by weight of a comonomer;
(b) a photopolymerizable solvent selected from the group consisting of N-vinyl pyrrolidone N,N-dimethyl acrylamide, gamma butyrolactone and mixtures thereof; and
(c) a photoinitiator comprising benzophenone and ethyl diethanolamine.

**18.** A photocurable coating composition as claimed in claim 1 comprising;
(a) a high nitrile resin comprising butadieneacrylonitrile preformed rubbery resin,
(b) a photopolymerizable solvent comprising N-vinylpyrrolidine N,N-dimethylacrylamide, gamma butyrolactone, and
(c) a photoinitiator comprising benzophenone and ethyl diethanolamine.

## Revendications

**1.** Composition de revêtement photoréticulable comprenant : (a) une résine à forte teneur en nitrile, (b) un solvant photopolymérisable et (c) un photoinitiateur, la résine à forte teneur en nitrile étant constituée par un copolymère formé par la polymérisation de :

100 parties en poids (A) de 60 pour-cent à 90 pour-cent en poids d'au moins un nitrile de structure :

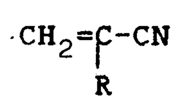

où R est l'hydrogène, un groupe alkyle inférieur possédant de 1 à 4 atomes de carbone ou un

halogène, et (B) de 10 à 40 pour-cent en poids, sur la base du poids total de (A) et (B), d'au moins un élément choisi dans le groupe constitué par (1) un ester possédant la structure:

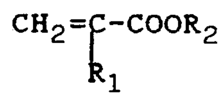

où $R_1$ est l'hydrogène, un groupe alkyle comportant de 1 à 30 atomes de carbone ou un halogène et $R_2$ est un groupe alkyle comportant de 1 à 6 carbones (2) d'une alpha-oléfine dont la structure est:

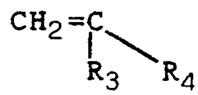

où $R_3$ et $R_4$ sont des groupes alkyles comportant de 1 à 7 atomes de carbone, (3) un éther vinylique choisi dans le groupe constitué par l'éther méthyl-vinylique, l'éther éthyl-vinylique, les éthers propyl-vinyliques, et les éthers butyl-vinyliques, (4) l'acétate de vinyle, (5) le styrène, et (6) l'indène, en présence de 1 à 40 parties en poids de (C) un caoutchouc d'un monomère de diène conjugué choisi dans le groupe constitué par le butadiène et l'isoprène et, éventuellement, un comonomère choisi dans le groupe constitué par le styrène, un monomère de nitrile de structure :

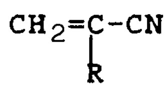

où R est défini comme ci-dessus et un ester possédant la structure :

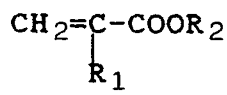

où $R_1$ et $R_2$ sont tels que définis ci-dessus, ledit caoutchouc contenant de 50 pour-cent à 100 pour-cent en poids d'un diène conjugué polymérisé et de 0 pour-cent à 50 pour-cent en poids d'un comonomère.

2. Composition de revêtement photoréticulable selon la revendication 1, caractérisée en ce que ladite résine à forte teneur en nitrile comprend de 40 à 90 pour-cent de nitrile, de 5 à 40 pour-cent de monomère monovinylique et de 1 à 30 pour-cent de caoutchouc, de préférence de 65 à 75 pour-cent de nitrile, de 25 à 35 pour-cent de monomère monovinylique et de 1 à 20 pour-cent de caoutchouc.

3. Composition de revêtement photoréticulable selon la revendication 1 ou la revendication 2, caractérisée en ce que ledit nitrile mono éthylénique est choisi dans le groupe constitué par l'acrylonitrile, l'alpha-chloroacrylonitrile, l'alpha-fluoroacrylonitrile, le méthacrylonitrile, l'éthacrylonitrile et des mélanges de ceux-ci.

4. Composition de revêtement photoréticulable selon l'une des revendications 1 à 3, caractérisée en ce que ledit deuxième composant monomère monovinylique est choisi dans le groupe constitué par l'acide acrylique, l'acide méthacrylique, un méthylacrylate, un éthylacrylate, un méthyl-méthacrylate, un éthyl-méthacrylate, un isobutylène, l'éther méthyl-vinylique, l'éther éthyl-vinylique, les éthers propyl-vinyliques, les éthers butyl-vinyliques, l'acétate de vinyle, le styrène, l'indène et des mélanges de ceux-ci.

5. Composition de revêtement photoréticulable selon l'une quelconque des revendications 1 à 4, caractérisée en ce que ledit caoutchouc comprend un homopolymère d'un monomère de diène conjugué.

**6.** Composition de revêtement photoréticulable selon l'une quelconque des revendications 1 à 5, caractérisée en ce que ledit caoutchouc comprend de 50 à 100 pour-cent en poids d'un monomère de diène conjugué et de 0 à 50 pour-cent en poids d'un comonomère.

**7.** Composition de revêtement photoréticulable selon l'une quelconque des revendications 1 à 6, caractérisée en ce que le solvant photopolymérisable est choisi dans le groupe constitué par les acrylates, l'acide carboxylique éthylénique, et leurs anhydrides, des esters vinyliques, des halogénures vinyliques, des cyanures vinyliques, des amides vinyliques, des amines vinyliques, des oléfines, et des mélanges de ceux-ci.

**8.** Composition de revêtement selon la revendication 7 caractérisée, en ce que le solvant photopolymérisable est choisi dans le groupe constitué par la N-vinyl pyrrolidone, le cyanoéthylacrylate, le styrène, le N, N-diméthylacrylamide, le N, N-méthylènebisacrylamide, la gammabutyrolactone et les mélanges de ceux-ci.

**9.** Composition de revêtement photoréticulable selon l'une quelconque des revendications 1 à 8, caractérisée en ce que le photoinitiateur est choisi dans le groupe constitué par
(a) la benzophénone, le benzyle, de l'éther benzoïne-éthylique ; et
(b) l'azobisiobutyronitrile, l'éthyl-diéthanolamine ou un mélange de ceux-ci.

**10.** Composition de revêtement photoréticulable selon la revendication 9, caractérisée en ce que le photoinitiateur est la benzophénone et l'éthyl-diéthanolamine.

**11.** Procédé de préparation d'une composition de revêtement photoréticulée, caractérisé en ce qu'une composition telle que revendiquée dans l'une quelconque des revendications 1 à 10 est appliquée sur un substrat pour former un revêtement, et le revêtement est traité par irradiation pour former la composition de revêtement photoréticulée.

**12.** Procédé selon la revendication 11, caractérisé en ce que le rayonnement a une longueur d'onde de 2200 A (2200 x $10^{-10}$m) à 14000 A (14000 x $10^{-10}$m).

**13.** Procédé selon la revendication 12, caractérisé en ce que la résine de revêtement photoréticulée est cuite.

**14.** Procédé selon la revendication 13, caractérisé en ce que la cuisson est effectuée à une température comprise entre 40° C et 240° C.

**15.** Procédé selon la revendication 14, caractérisé, en ce que la cuisson est effectuée à une température comprise entre 90° C et 180° C, et de préférence entre 100° C et 140° C.

**16.** Procédé selon l'une quelconque des revendications 13 à 15, caractérisé en ce que la période de cuisson est comprise entre 30 secondes et 24 heures, de préférence entre 1 minute et 8 heures, et en particulier entre 2 minutes et 2 heures.

**17.** Composition de revêtement photoréticulable selon la revendication 1 comprenant :
(a) une résine à forte teneur en nitrile comprenant : 100 parties en poids de (A) 60 pour-cent à 90 pour-cent en poids d'au moins un nitrile présentant la structure:

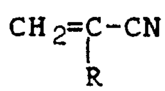

où R est tel que défini dans la revendication 1, et (B) de 10 à 40 pour-cent en poids, sur la base des poids combinés de (A) et (B), d'au moins un élément choisi dans le groupe constitué par (1) un ester de structure :

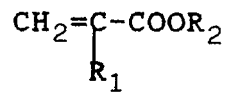

où $R_1$ et $R_2$ sont tels que définis dans la revendication 1, (2) une alpha-oléfine dont la structure est:

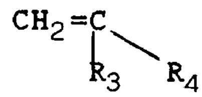

où $R_3$ et $R_4$ sont tels que définis dans la revendication 1, (3) un éther vinylique choisi dans le groupe constitué par l'éther méthyl-vinylique, l'éther éthyl-vinylique, les éthers propyl-vinyliques, et les éthers butyl-vinyliques, (4) de l'acétate de vinyle, (5) du styrène, et (6) de l'indène, en présence de 1 à 40 parties en poids de (C) un caoutchouc d'un monomère de diène conjugué choisi dans le groupe constitué par le butadiène et l'isoprène et, éventuellement, un comonomère choisi dans le groupe constitué par le styrène, un monomère de nitrile présentant la structure :

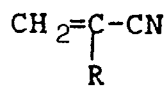

où R est tel que défini dans la revendication 1, et un ester possédant la structure :

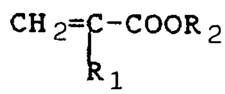

où $R_1$ et $R_2$ sont tels que définis dans la revendication 1, ledit caoutchouc contenant de 50 pour-cent à 100 pour-cent en poids d'un diène conjugué polymérisé et de 0 pour-cent à 50 pour-cent en poids d'un comonomère ;

(b) un solvant photopolymérisable choisi dans le groupe constitué par la N-vinyl pyrrolidone, le N, N-diméthylacrylamide, la gammabutyrolactone et des mélanges de ceux-ci ; et

(c) un photoinitiateur comprenant du benzophénone et de l'éthyl-diéthanolamine.

**18.** Composition de revêtement photoréticulable selon la revendication 1 comprenant :

(a) une résine à forte teneur en nitrile comprenant un caoutchouc de butadiène-acrylonitrile préformé

(b) un solvant photopolymérisable comprenant de la N-vinylpyrrolidine, du N,N-diméthylacrylamide, de la gamma butyrolactone, et

(c) un photoinitateur comprenant de la benzophénone et de l'éthyl-diéthanolamine.

## Ansprüche

**1.** Photohärtbare Überzugszusammensetzung, umfassend (a) ein Harz mit hohem Nitrilgehalt (b), ein photopolymerisierbares Lösungsmittel und (c) einen Photoinitiator, wobei das Harz mit hohem Nitrilgehalt ein Copolymeres umfaßt, das gebildet wurde durch Polymerisation von: 100 Gewichtsteilen von (A) 60 bis 90 Gewichtsprozent mindestens eines Nitrils mit der Struktur:

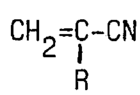

worin R Wasserstoff, eine niedrige Alkylgruppe mit 1 bis 4 Kohlenstoffatomen oder ein Halogen ist, und

(B) 10 bis 40 Gewichtsprozent basierend auf den gemeinsamen Gewichten von (A) und (B) von mindestens einer Verbindung ausgewählt aus der Gruppe von (1) einem Ester mit der Struktur:

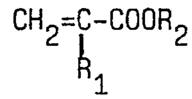

worin $R_1$ Wasserstoff, eine Alkylgruppe mit 1 bis 30 Kohlenstoffatomen oder ein Halogen ist und $R_2$ eine Alkylgruppe mit 1 bis 6 Kohlenstoffen ist, (2) einem alpha-Olefin mit der Struktur:

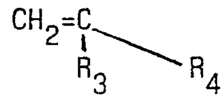

worin $R_3$ und $R_4$ Alkylgruppen mit 1 bis 7 Kohlenstoffatomen sind, (3) einem Vinylether, ausgewählt aus der Gruppe von Methylvinylether, Ethylvinylether, den Propylvinylethern und den Butylvinylethern, (4) Vinylacetat, (5) Styrol und (6) Inden, in der Anwesenheit von 1 bis etwa 40 Gewichtsteilen von (C) einem Kautschuk aus einem konjugierten Dienmonomeren, ausgewählt aus der Gruppe von Butadien und Isopren und gegebenenfalls einem Comonomeren, ausgewählt aus der Gruppe von Styrol, einem Nitrilmonomeren mit der Struktur:

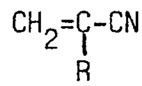

worin R wie vorstehend definiert ist und einem Ester mit der Struktur:

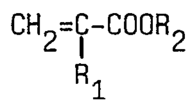

worin $R_1$ und $R_2$ wie vorstehend definiert sind, wobei das kautschukartige Polymere 50 bis 100 Gewichtsprozent polymerisiertes konjugiertes Dien und 0 bis 50 Gewichtsprozent eines Comonomeren enthält.

2. Photohärtbare Überzugszusammensetzung nach Anspruch 1, dadurch gekennzeichnet, daß das Harz mit hohem Nitrilgehalt 40 bis 90 Prozent Nitril, 5 bis 40 Prozent Monovinylmonomeres und 1 bis 30 Prozent Kautschuk, vorzugsweise 65 bis 75 Prozent Nitril, 25 bis 35 Prozent Monovinylmonomeres und 1 bis 20 Prozent Kautschuk enthält.

3. Photohärtbare Überzugszusammensetzung nach Anspruch 1 oder Anspruch 2, dadurch gekennzeichnet, daß das monoungesättigte Nitril ausgewählt ist aus der Gruppe von Acrylnitril, alpha-Chloracrylnitril, alpha-Fluoracrylnitril, Methacrylnitril, Ethacrylnitril und Kombinationen davon.

4. Photohärtbare Überzugszusammensetzung nach einem der Ansprüche 1 bis 3, dadurch gekennzeichnet, daß die zweite Monovinylmonomerkomponente ausgewählt ist aus der Gruppe von Acrylsäure, Methacrylsäure, Methylacrylat, Ethylacrylat, Methylmethacrylat, Ethylmethacrylat, Isobutylen, Methylvinylether, Ethylvinylether, Propylvinylethern, Butylvinylethern, Vinylacetat, Styrol, Indol und Kombinationen davon.

5. Photohärtbare Überzugszusammensetzung nach einem der Ansprüche 1 bis 4, dadurch gekennzeichnet, daß der Kautschuk ein Homopolymeres eines konjugierten Dienmonomeren umfaßt.

6. Photohärtbare Überzugszusammensetzung nach einem der Ansprüche 1 bis 5, dadurch gekennzeichnet, daß der Kautschuk 50 bis 100 Gew.% eines konjugierten Dienmonomeren und 0 bis 50 Gew.%

eines Comonomeren umfaßt.

7. Photohärtbare Überzugszusammensetzung nach einem der Ansprüche 1 bis 6, dadurch gekennzeichnet, daß das photopolymerisierbare Lösungsmittel ausgewählt ist aus der Gruppe von Acrylaten, olefinisch ungesättigten Carbonsäuren und ihren Anhydriden, Vinylestern, Vinylhalogeniden, Vinylcyaniden, Vinylamiden, Vinylaminen, Olefinen und Kombinationen davon.

8. Überzugszusammensetzung nach Anspruch 7, dadurch gekennzeichnet, daß das photopolymerisierbare Lösungsmittel ausgewählt ist aus der Gruppe von N-Vinylpyrrolidon, Cyanoethylacrylat, Styrol, N,N-Dimethylacrylamid, N,N-Methylenbisacrylamid, gamma-Butyrolacton und Kombinationen davon.

9. Photohärtbare Überzugszusammensetzung nach einem der Ansprüche 1 bis 8, dadurch gekennzeichnet, daß der Photoinitiator ausgewählt ist aus der Gruppe von:
   a) Benzophenon, Benzyl, Benzoinethylether; und
   b) Azobisisobutyronitril, Ethyldiethanolamin oder einer Kombination davon.

10. Photohärtbare Überzugszusammensetzung nach Anspruch 9, dadurch gekennzeichnet, daß der Photoinitiator Benzophenon und Ethyldiethanolamin ist.

11. Verfahren zur Herstellung einer photogehärteten Überzugszusammensetzung, dadurch gekennzeichnet, daß eine Zusammensetzung wie in einem der Ansprüche 1 bis 10 beansprucht auf ein Substrat zur Bildung eines Überzugs aufgetragen wird und der Überzug durch Bestrahlen zur Bildung der photogehärteten Überzugszusammensetzung gehärtet wird.

12. Verfahren nach Anspruch 11, dadurch gekennzeichnet, daß die Bestrahlung Wellenlängen von 2200 Å ($2200 \times 10^{-10}$m) bis 14000 Å ($14000 \times 10^{-10}$m) umfaßt.

13. Verfahren nach Anspruch 12, dadurch gekennzeichnet, daß das photogehärtete Überzugsharz eingebrannt wird.

14. Verfahren nach Anspruch 13, dadurch gekennzeichnet, daß das Einbrennen bei einer Temperatur im Bereich von 40 °C bis 240 °C durchgeführt wird.

15. Verfahren nach Anspruch 14, dadurch gekennzeichnet, daß das Einbrennen bei einer Temperatur von 90 °C bis 180 °C und vorzugsweise von 100 °C bis 140 °C durchgeführt wird.

16. Verfahren nach einem der Ansprüche 13 bis 15, dadurch gekennzeichnet, daß die Einbrennzeit im Bereich von 30 Sekunden bis 24 Stunden, vorzugsweise einer Minute bis 8 Stunden und insbesondere 2 Minuten bis 2 Stunden, liegt.

17. Photohärtbare Überzugszusammensetzung nach Anspruch 1, umfassend:
   a) ein Harz mit hohem Nitrilgehalt, umfassend
   100 Gewichtsteile von (A) 60 bis 90 Gewichtsprozent mindestens eines Nitrils mit der Struktur:

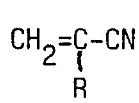

worin R wie in Anspruch 1 definiert ist und (B) 10 bis 40 Gewichtsprozent basierend auf dem gemeinsamen Gewicht von (A) und (B) von mindestens einer Verbindung, ausgewählt aus der Gruppe von (1) einem Ester mit der Struktur:

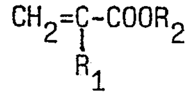

worin $R_1$ und $R_2$ wie in Anspruch 1 definiert sind, (2) einem alpha-Olefin mit der Struktur:

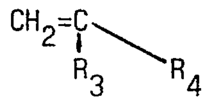

worin $R_3$ und $R_4$ wie in Anspruch 1 definiert sind, (3) einem Vinylether, ausgewählt aus der Gruppe von Methylvinylether, Ethylvinylether, den Propylvinylethern und den Butylvinylethern, (4) Vinylacetat, (5) Styrol, und (6) Inden, in Anwesenheit von 1 bis etwa 40 Gewichtsteilen von (C) einem Kautschuk aus einem konjugierten Dienmonomeren, ausgewählt aus der Gruppe, bestehend aus Butadien und Isopren und gegebenenfalls einem Comonomeren, ausgewählt aus der Gruppe bestehend aus Styrol, einem Nitrilmonomeren mit der Struktur:

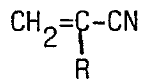

worin R wie in Anspruch 1 definiert ist und einem Ester mit der Struktur:

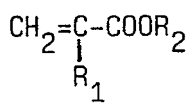

worin $R_1$ und $R_2$ wie in Anspruch 1 definiert sind, wobei das kautschukartige Polymere 50 bis 100 Gewichtsprozent polymerisiertes konjugiertes Dien und 0 bis 50 Gewichtsprozent eines Comonomeren enthält;

b) ein photopolymerisierbares Lösungsmittel, ausgewählt aus der Gruppe von N-Vinylpyrrolidon, N,N-Dimethylacrylamid, gamma-Butyrolacton und Gemischen davon und

c) einen Photoinitiator, umfassend Benzophenon und Ethyldiethanolamin.

**18.** Photohärtbare Überzugszusammensetzung nach Anspruch 1, umfassend:

a) ein Harz mit hohem Nitrilgehalt, umfassend ein vorgeformtes kautschukartiges Butadien-Acrylnitril-Harz,

b) ein photopolymerisierbares Lösungsmittel, umfassend N-Vinylpyrrolidon, N,N-Dimethylacrylamid, gamma-Butyrolacton und

c) einen Photoinitiator, umfassend Benzophenon und Ethyldiethanolamin.